# EUROPEAN PATENT APPLICATION

(11) **EP 3 766 604 A1**
(43) Date of publication of application: **20.01.2021**
(21) Application number: 19020559.1
(22) Date of filing: 07.10.2019
(51) Int. Cl.: B22F 3/105, B33Y 10/00, B33Y 30/00, B33Y 40/00, B29C 64/371

(54) **METHOD AND DEVICE FOR PURGING AN ADDITIVE MANUFACTURING SPACE**

(30) Priority: 18.07.2019 EP 19020435
(71) Applicant: Linde GmbH, 82049 Pullach (DE)
(72) Inventor: Neuner, Fabian, 80809 München (DE); Arunprasad, Tanja, 80336 München (DE)
(74) Representative: Gellner, Bernd

(57) **Abstract**

The present invention refers to a method and a corresponding device for purging an additive manufacturing space wherein a liquid inert cryogen is fed to the manufacturing space via a feeding device that controls vaporization and heating of the cryogen to produce a unidirectional, laminar flow of gaseous cryogen into the manufacturing space.

## Description

The present invention relates to a method and to a device for purging additive manufacturing space.

The main differences between processes for additive manufacturing (AM) are in the way layers are deposited to create parts and in the materials that are used. Some methods melt or soften the material to produce the layers, for example selective laser melting (SLM) or direct metal laser sintering (DMLS), selective laser sintering (SLS), fused deposition modeling (FDM), or fused filament fabrication (FFF), Direct Energy Deposition (DED) while others cure liquid materials using different sophisticated technologies.

Selective laser sintering (SLS) is an additive manufacturing (AM) technique that uses a laser as the power source to sinter powdered material, aiming the laser automatically at points in space defined by a 3D model, binding the material together to create a solid structure. It is similar to direct metal laser sintering (DMLS). Both are instantiations of the same concept but differ in technical details. Selective laser melting (SLM) uses a comparable concept, but in S LM the material is fully melted rather than sintered, allowing different properties (crystal structure, porosity, and so on). S LS involves the use of a high power laser (for example, a carbon dioxide laser) to fuse small particles of plastic, metal, ceramic, or glass powders into a mass that has a desired three-dimensional shape. The laser selectively fuses powdered material by scanning cross-sections generated from a 3-D digital description of the part (for example from a CAD file or scan data) on the surface of a powder bed. After each cross-section is scanned, the powder bed is lowered by one layer thickness, a new layer of material is applied on top, and the process is repeated until the part is completed. Because finished part density depends on peak laser power, rather than laser duration, a SLS machine typically uses a pulsed laser. Direct Energy Deposition (DED) uses a Laser or an Electric Arc to melt a Feedstock (powder or wire) which is added by spraying or regular feeding onto the layers.

Selective laser melting (SLM) is a particular rapid prototyping, 3D printing, or Additive Manufacturing (AM) technique designed to use a high power-density laser to melt and fuse metallic powders together. In many SLM is considered to be a subcategory of Selective Laser Sintering (SLS). The SLM process has the ability to fully melt the metal material into a solid 3D-dimensional part unlike S LS. With selective laser melting, thin layers of atomized fine metal powder are evenly distributed using a coating mechanism onto a substrate plate, usually metal, that is fastened to an indexing table that moves in the vertical (Z) axis. This takes place inside a chamber containing a tightly controlled atmosphere of inert gas, either argon or nitrogen at oxygen levels below 500 parts per million. Once each layer has been distributed, each 2D slice of the part geometry is fused by selectively melting the powder. This is accomplished with a high-power laser beam, usually an ytterbium fiber laser with hundreds of watts. The laser beam is directed in the X and Y directions with two high frequency scanning mirrors. The laser energy is intense enough to permit full melting (welding) of the particles to form solid metal. The process is repeated layer after layer until the part is complete.

E lectron-beam additive manufacturing or electron-beam melting (E BM) is a type of additive manufacturing, or 3D printing, for metal parts. The raw material (metal powder or wire) is placed under a vacuum and fused together from heating by an electron beam. This technique is distinct from selective laser sintering as the raw material fuses having completely melted.

Metal powders can be consolidated into a solid mass using an electron beam as the heat source. Parts are manufactured by melting metal powder, layer by layer, with an electron beam in a high vacuum. This powder bed method produces fully dense metal parts directly from metal powder with characteristics of the target material. The E BM machine reads data from a 3D CAD model and lays down successive layers of powdered material. These layers are melted together utilizing a computer-controlled electron beam. In this way it builds up the parts. The process takes place under vacuum, which makes it suited to manufacture parts in reactive materials with a high affinity for oxygen, e.g. titanium. The process is known to operate at higher temperatures (up to 1000 eC), which can lead to differences in phase formation though solidification and solid-state phase transformation.

The powder feedstock is typically pre-alloyed, as opposed to a mixture. That aspect allows classification of EBM with selective laser melting (SLM), where competing technologies like SLS and DMLS require thermal treatment after fabrication. Compared to SLM and DMLS, EBM has a generally superior build rate because of its higher energy density and scanning method.

Selective heat sintering (SHS) is a type of additive manufacturing process. It works by using a thermal print head to apply heat to layers of powdered thermoplastic. When a layer is finished, the powder bed moves down, and an automated roller adds a new layer of material which is sintered to form the next cross-section of the model. S HS is best for manufacturing inexpensive prototypes for concept evaluation, fit/form and functional testing. SHS is a Plastics additive manufacturing technique similar to selective laser sintering (SLS), the main difference being that SHS employs a less intense thermal print head instead of a laser, thereby making it a cheaper solution, and able to be scaled down to desktop sizes.

Direct metal laser sintering (DMLS) is an additive manufacturing metal fabrication technology, occasionally referred to as selective laser sintering (SLS) or selective laser melting (S LM), that generates metal prototypes and tools directly from computer aided design (CAD) data. It is unique from S LS or S LM because the process uses a laser to selectively fuse a fine metal powder. DMLS uses a variety of alloys, allowing prototypes to be functional hardware made out of the same material as production components. Since the components are built layer by layer, it is possible to design organic geometries, internal features and challenging passages that could not be cast or otherwise machined. DMLS produces strong, durable metal parts that work well as both functional prototypes or end-use production parts. The DMLS process begins with a 3D CAD model whereby a .stl file is created and sent to the machine's computer program. The DMLS machine uses a high-powered 200 watt Yb-fiber optic laser. Inside the build chamber area, there is a material dispensing platform and a built platform along with a recoater blade used to move new powder over the built platform. The technology fuses metal powder into a solid part by melting it locally using the focused laser beam. Parts are built up additively layer by layer, typically using layers 20 micrometers thick.

Another approach is to use an electron beam to melt welding wire (Metal wire-based systems; wire ar additive manufacturing WAAM) onto a surface to build up a part. This is similar to the common 3D printing process of fused deposition modeling, but with metal, rather than plastics. With this process, an electron-beam gun provides the energy source used for melting metallic feedstock, which is typically wire. The electron beam is a highly efficient power source that can be both precisely focused and deflected using electromagnetic coils at rates well into thousands of hertz. Typical electron-beam welding systems have high power availability, with 30- and 42-kilowatt systems being most common. A major advantage of using metallic components with electron beams is that the process is conducted within a high-vacuum environment of 1B10 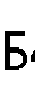 4 Torr or greater, providing a contamination-free work zone that does not require the use of additional inert gases commonly used with laser and arc-based processes. With EBDM, feedstock material is fed into a molten pool created by the electron beam. Through the use of computer numeric controls (CNC), the molten pool is moved about on a substrate plate, adding material just where it is needed to produce the near net shape. This process is repeated in a layer-by-layer fashion, until the desired 3D shape is produced.

Depending on the part being manufactured, deposition rates can range up to 200 cubic inches (3,300 cm3) per hour. With a light alloy, such as titanium, this translates to a real-time deposition rate of 40 pounds (18 kg) per hour. A wide range of engineering alloys are compatible with the EBDM process and are readily available in the form of welding wire from an existing supply base. These include, but are not limited to, stainless steels, cobalt alloys, nickel alloys, copper nickel alloys, tantalum, titanium alloys, as well as many other high-value materials.

In general additive manufacturing is a manufacturing technology that includes a methodology whereby a heat source melts a feedstock of material which is deposited onto a substrate. Computer control of the movement of the heat source, and the source of the feedstock, makes it possible to build complex components. In additive manufacturing the processing is not limited to the above-mentioned methods in which metal powders are processed but composites or polymers are processed. The heat source can include (but is not limited to) the already mentioned laser beam, an arc, or other plasma-based heat sources.

LMF processes take place in a process chamber that is filled with a process gas. Usually, an inert gas is used, in which the contaminants must be strictly controlled. For example, the oxygen content may not exceed a certain threshold between 1ppm and 1000ppm. Another example of contamination is the moisture present in the process space, which also needs to be tightly controlled. Further examples of impurities are nitrogen, hydrogen, CO₂ and other gases.

When a process chamber of an additive manufacturing device is opened to remove a manufactured component in order to begin production of a new component, ambient air enters the process chamber. This ambient air must be removed by purging the chamber with inert gas until an oxygen content has dropped to a certain threshold. The purging gas is introduced into the process chamber via one or more gas inlets. The purging of the chamber takes a relatively long time (up to 8 hours), especially when the threshold levels of impurities are low or if the volume of the chamber is large and cannot be sealed completely.

Current purging and gas shield method are insufficient in that the oxygen and moisture levels are relatively high at the beginning of the process even though a purge cycle has taken place. The purge cycle in itself takes a long time and reduces the efficiency of the additive manufacturing process in that no building process can take place till the purge cycle is undertaken to bring the oxygen level below a certain threshold for example 6000 ppm oxygen level.

Furthermore large scale automated systems for DE D and also for wire arc additive manufacturing (WAAM) require large enclosures which would encompass and contain inside its external framework all the required welding equipment, tables, automated systems like a ROBOT and or manipulation devices. The size of the enclosures can vary significantly depending on the application in question from roughly 1m3 to over 50 m3 volumes. The problem in the industry is the time it takes to purge the enclosure to remove air which has undesirable components in the air like oxygen, nitrogen and moisture.

Documents DE 196 49 865 C1, WO 2014/199150 A1 and EP 3 219 416 A1 disclose devices and methods for purging a process chamber with for example gaseous argon.

It is an object of the present invention to provide an improved method and an improved device for purging an additive manufacturing space.

It is a further object of the present invention to provide a method and a device for purging an additive manufacturing space wherein oxygen and/or moisture levels in the manufacturing space can be reduced efficiently.

Furthermore it is an object of the present invention to provide a method and a device for purging an additive manufacturing space which reduces the purging time and reduces the mixing between the gas that is initially within the manufacturing space and the purging gas .

Normal practice of reducing the oxygen concentration within an additive manufacturing chamber is to purge the chamber with an appropriate inert gas which dilutes the gas that is initially in the chamber. The time taken for this purge to reduce the residual oxygen concentration depends on the flow rate of the gas, the size of the chamber and the internal shape of the chamber.

The inventors of the present invention have recognized that the current purging and gas shield methods are insufficient in that the oxygen and moisture levels are relatively high at the beginning of the melting process even though a purge cycle has taken place. Alternatively, purging may need to be continued for a long time to ensure the oxygen concentration has fallen below the required threshold value (e.g. 6000 ppm, 1000 ppm, 100 ppm or 10ppm). This can significantly reduce the productivity of a given additive manufacturing apparatus.

One or more of these problems are solved by a method according to independent claim 1 and by an apparatus according to independent claim 13. Advantageous embodiments are defined in the sub-claims.

According to the present invention a method is provided for purging an additive manufacturing space by feeding a liquid inert cryogen to the manufacturing space.

According to an aspect of the present invention there is provided a method for purging an additive manufacturing space,
characterized in that,
a liquid inert cryogen is fed to the manufacturing space via a device comprising:
an injection zone arranged to receive the liquid cryogen in a liquid state;
a heating zone arranged to receive liquid cryogen from the injection zone, the heating zone being arranged to vaporize and raise the temperature of the liquid cryogen, such that a flow of the cryogen in a gaseous state exits the heating zone; and
a flow rectification zone arranged to receive the flow of the gaseous cryogen from the heating zone, the flow rectification zone being arranged to rectify the flow of gaseous cryogen such that a straightened flow of gaseous cryogen exits the rectification zone.

Within the context of the present specification, a 'straightened_flow is considered to be a flow that has a reduced turbulence intensity as compared the flow entering the rectification zone. The reduced turbulences avoid a mixing of purging gas and air. Purging times can be reduced if the present volume is removed (pushed out) instead of being diluted.

The straightened flow may be a substantially unidirectional flow, and/or the straightened flow may be substantially non-turbulent, or laminar.

The present invention provides a method for purging air from an additive manufacturing space or chamber especially from a direct energy deposition (DE D) additive manufacturing chamber or from a wire arc additive manufacturing (WAAM) chamber by feeding a liquid inert cryogen into the chamber. The liquid inert cryogen enters the chamber via a device comprising an injection zone, a heating zone and a flow rectification zone. The liquid inert cryogen is rapidly vaporized and heated in the heating zone, such that a flow of the cryogen in a gaseous state exits the heating zone. The flow rectification zone is arranged to receive the flow of the gaseous cryogen from the heating zone and to rectify the flow of gaseous cryogen such that a substantially unidirectional flow of gaseous cryogen exits the rectification zone and enters the manufacturing space. The flow entering the manufacturing space from the flow rectification zone may be laminar. Advantageously, such a laminar flow may displace the ambient air that is initially in the manufacturing space and cause it to exit the manufacturing space, with little or no mixing between the ambient air and the gaseous cryogen occurring. Accordingly, the present invention provides a quick and economical method for purging a manufacturing space by displacement rather than dilution of ambient air.

The substantially unidirectional flow of gaseous cryogen can enter the manufacturing space from the rectification zone.

Optionally, the manufacturing space is a chamber for additive manufacturing like a DED (Direct Energy Deposition) additive manufacturing chamber, preferably a WAAM (Wire Arc Additive Manufacturing) chamber or a LPBF (Laser Powder Bed Fusion, SLM, DMLS) chamber.

Optionally, the liquid inert cryogen may be liquid Nitrogen, liquid Argon or liquid Helium.

The average flowrate of liquid Nitrogen may be between 0,25 kg/min to 10 kg/min or to 30 kg/min or to 40 kg/min or to 50 kg/min or between 0,5 kg/min to 2,5 kg/min and preferably between 1 kg/min to 2 kg/min.

The average flowrate of liquid Argon may be between 0,25 kg/min to 25 kg/min to 30 kg/min or to 40 kg/min or to 50 kg/min or between 0,5 kg/min to 12 kg/min and preferably between 1 kg/min to 10 kg/min.

The flow rate shall be adjusted in a way that a laminar flow is generated and turbulences are avoided.

At least one heat exchanger can be disposed in the heating zone.

In an embodiment, the heating zone is divided into a vaporization zone in which the liquid cryogen is vaporized and a separate heating zone in which the vaporized cryogen is heated.

Optionally, the device is placed at or near the lowest point inside the manufacturing space so that the substantially unidirectional flow of gaseous cryogen (the cryogen medium has than approximately ambient temperature) flows upwards through the manufacturing space. Further optionally, the substantially unidirectional flow of gaseous cryogen flows upwards through the manufacturing space to an exhaust port located at or near the highest point in the manufacturing space.

The fact that the purging medium is supplied at the level of the working level or below causes the manufacturing space to fill from bottom to top with the process gas. For gas which is lighter the air. The system can also be installed on top of the working space to fill from top to bottom

In this way, the heavier gaseous inert gas pushes the lighter air into the upper area of the process chamber, where the outlet, or exhaust port, is provided for venting the air. The outlet needs to be of sufficient size to have the capacity to let the expanding gas escape without forming a back pressure wave which would cause a high pressure inside the build chamber.

In an embodiment the content of oxygen in the manufacturing space is reduced to a set predetermined level, wherein the set predetermined level is determined by the sensitivity of the powder to oxygen to approximately 10 parts per million of oxygen so that the powder can be melted wherein the set oxygen level is preferably less than 1000 ppm or less than 100 ppm or less than 10 ppm.

In an embodiment, the method comprises the further steps of,
providing a base material on a substrate,
melting the base material with a heat source, and
repeating the aforementioned steps. Such steps may be used to produce a solid article in the purged manufacturing space.

By means of the method according to the invention, the time for purging the process chamber is considerably reduced. Thus, it is possible by means of the method according to the invention to reduce the impurities in the process chamber more efficiently or to bring them faster below a predetermined threshold value.

According to another aspect of the invention, there is provided an apparatus for additive manufacturing comprising:
a base material delivery system,
a heat source which is a device for generating a plasma or an arc or a laser for melting the powder, and a
process chamber,
characterized in that,
a device for feeding liquid inert cryogen to the manufacturing space is connected to the manufacturing space chamber of the device,
characterized in that the device comprises:
   an injection zone arranged to receive the liquid cryogen in a liquid state;
   a heating zone arranged to receive liquid cryogen from the injection zone, the heating zone being arranged to vaporize and raise the temperature of the liquid cryogen, such that a flow of the cryogen in a gaseous state exits the heating zone; and
   a flow rectification zone arranged to receive the flow of the gaseous cryogen from the heating zone, the flow rectification zone being arranged to rectify the flow of gaseous cryogen such that a straightened flow of gaseous cryogen exits the rectification zone.

Within the context of the present specification, a 'straightened_flow is considered to be a flow that has a reduced turbulence intensity as compared the flow entering the rectification zone.

The straightened flow is preferably a unidirectional flow, and is preferably substantially non-turbulent, or laminar.

In an embodiment, the device is placed at or near the lowest point inside the manufacturing space so that the substantially unidirectional flow of gaseous cryogen flows upwards through the manufacturing space. Optionally, the manufacturing space further comprises an exhaust port at or near the highest point in the manufacturing space, such that the substantially unidirectional flow of gaseous cryogen flows upwards through the manufacturing space to the exhaust port.

The additive manufacturing space or chamber can have a volume from about 1 m³ or 2 m³ or 3 m³ or 4 m³ or 5 m³ or 10 m³ or 15 m³ or 20 m³ 25 m³ or 30 m³ 35 m³ or 40 m³ or 45 m³ or 50 m³ or 60 m³ or 70 m³ or 80 m³ to about 100 m³ volume when larger scale additive manufactured components will be built.

The present invention is applicable to the following aspects of additive manufacturing.

Most powder-bed based additive manufacturing systems use a powder deposition system consisting of a coating process mechanism which spreads a layer of powder onto a substrate plate using a powder reservoir. Examples of the process include Selective Laser Melting (S LM) and Direct Metal Laser Sintering (DMLS).

Laser Metal Fusion is known by many names like metal selective laser sintering, metal laser melting, direct metal printing and direct metal laser sintering. Laser Metal Deposition (LMD), alternatively known as near net shape, is a process which uses a high-power laser beam, connected to a robot or gantry system, to form a melt pool on a metallic substrate into which powder or metal wire is fed.

Systems for direct energy deposition (DED), laser metal deposition additive manufacturing and wire arc additive manufacturing (WAAM) provide a very precise process by automated deposition of a layer of material of thicknesses varying between from 0.05-mm (50 microns) to several centimeters. Thereby the energy source can either be a laser or electron beam or plasma arc or an arc. The feedstock is either metal powder or wire. DE D and especially WAAM are preferred for carrying out the present invention.

The process is dissimilar to other welding techniques in that a low heat input penetrates the substrate and it generally aims to produce three-dimensional structures. The An adaption of the process like Laser Engineered Net Shaping (LENS) powder delivery system allows for the adding of material to an already existing part.

It can therefore be used for repairs to expensive metal components that may have been damaged, like chipped turbine blades and injection molding tool inserts.

The invention can relate to a method of manufacturing an article, such as a high value or aerospace article, made from metals alloys such as titanium, aluminum, iron, nickel and/or their alloys using an additive manufacturing method.

Wire arc additive manufacturing (WAAM) uses an electric arc as a heat source and solid wire rather than powder as feedstock. One of the advantages of WAAM technology is that it can be implemented using off-the-shelf welding equipment (GMAW, PLASMA ARC, GTAW etc.).

WAAM Is advantageous for building large scale structures. The deposition rates (i.e. productivity levels) are several times better than using powder bed AM processes (kg per hour as opposed to grams per hour with powder based systems).

Manufacturing large components i.e. greater than 10 kg etc. in steel, aluminum, titanium and other metals is commonly undertaken using Wire Arc Additive Manufacturing.

The WAAM method has High deposition rates, relatively low material and equipment costs, and gives good mechanical properties, this makes Wire Arc Additive Manufacturing a suitable manufacturing process compared solid billets or large forgings, for low and medium complexity components. A number of components have already been successfully manufactured with this process, including Ti⁻6Al⁻4V spars and landing gear assemblies, aluminum wing ribs, steel wind tunnel models and cones.

The invention is explained below with the aid of an embodiment shown in the drawings. The drawing shows in:
- Figure 1: a graph of a purge curve according to the prior art,
- Figure 2: a rough schematic view of a system for powder bed additive manufacturing according to an embodiment of the present invention,
- Figure 3: a rough schematic view of a system for wire arc additive manufacturing according to an embodiment of the present invention, and
- Figure 4: a rough schematic view of a device for introducing a process gas into a manufacturing space according to an embodiment of the present invention.

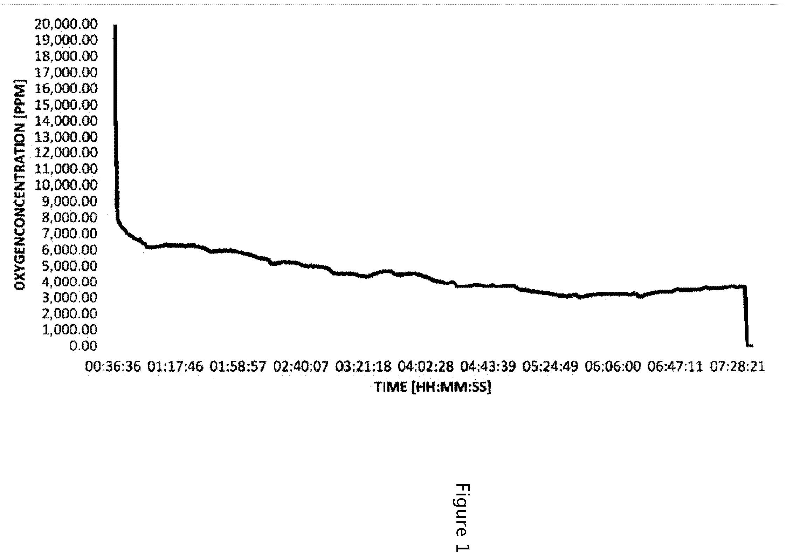

Figure 1 shows a purge curve for a prior art purging method in which the gas that is initially in the manufacturing space (typically ambient air) is diluted with the process gas until the concentration of oxygen and any other contaminants such as moisture fall below a prescribed threshold below which the quality of the part is not unacceptably reduced. For example, the threshold oxygen concentration may be 6000 ppm, 1000 ppm, 100 ppm or 10 ppm.

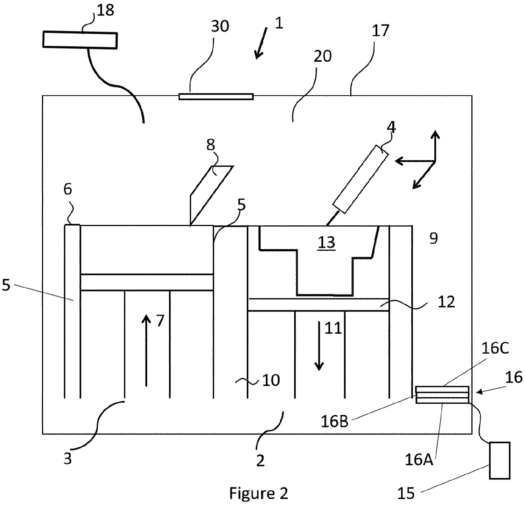

For a relatively medium size sintering chamber (for example about 0.5m³) it can take up to 1 hour and 8 minutes for the oxygen level to reduce to 6228 ppm. The graph in Figure 2 results from a data on a cell with a build cycle of over 7 hours. Given that no building could take place during the first 1 hour 8 minutes, a significant proportion of the build time was taken up by the purging step. This proportion is significantly increased if lower oxygen levels are needed or if the chamber is larger.

Generally the build cambers of DED systems can be several times larger in volume that powder-bed based systems. It is known that purging DE D systems to get down to low oxygen levels can take up to 4 hours before the AM process can be started. This is massively inefficient.

Therefore one problem to be solved is the extended length of time that is needed for oxygen concentration to be reduced from 200,000 ppm to 100ppm or 10 ppm. The nature of the purging process follows a mathematical power curve of the form Y=A*X^{-b}.
Y = oxygen concentration vertical axis
A = scaling factor or constant
X = time (in minutes) taken to reach the oxygen level on the graph.
b = exponent or power term of the mathematical expression or formula.

A power curve or power law is a functional relationship between two quantities, Y (oxygen) and X (time in minutes) above where a relative change in one quantity results in a proportional relative change in the other quantity, independent of the initial size of those quantities: one quantity varies as a power of another.

Gas Purging always follow the Power Curve, a fixed law in mathematics. 80% of the reduction in oxygen takes place in 20% of the time but the tail of the curve can be so long i.e. to get the oxygen levels down further can take a very long time.

The nature of this curve is such that the tail of the curve is very long, leading to extended times for reducing the oxygen concentration from 200 ppm to 10 ppm. This time period is controlled by the diffusion mechanism and cannot appreciably be reduced. This time period is dead time for fabricators and manufacturers as no production can continue until the 10 ppm level is reached.

As can be seen from figure 1 and the above discussion, the time required to purge a manufacturing space before an additive manufacturing process can begin represents a significant inefficiency that it would be desirable to reduce or eliminate.

Figure 2 shows an apparatus for additive manufacturing 1 according to an embodiment of the present invention. It is clear that the present invention is applicable for all methods and devices for additive manufacturing disclosed in this description.

The apparatus 1 comprises a production cylinder 2, a delivery cylinder 3 and a heat source 4.

The heat source 4 according to a preferred embodiment comprises a laser and a corresponding scanner system for melting metal powder (not shown).

The delivery cylinder 3 comprises a housing 5 with a wall 6 wherein a powder delivery piston 7 is disposed inside the housing 5.

A powder applying device 8, for example a roller, is provided for pushing a metal powder from the delivery cylinder 3 to the production cylinder 2.

The production cylinder 3 comprises a housing 9 with a wall 10.

A lift table 11 with a built platform 12 is disposed inside the wall 10 of the housing 9. The lift table 11 and the corresponding built platform 12 embody a fabrication piston.

The wall 10 of the housing 9 and the built platform 12 of the lift table 11 of the production cylinder 2 define a built space 13.

The built space 13 houses the fabrication powder bed and therefore the object being fabricated.

The built platform 12 can be an integral part of the lift table 11 of the fabrication piston or a separate part connected to the lift table 11.

Furthermore a processing chamber 17 is provided surrounding the production cylinder 2, the delivery cylinder 3 and the heat source 4.

The manufacturing space 20 according to the present invention is therefore the build space 13 of the production cylinder 2 defined by the 10 wall of the housing 9 of the production cylinder 2 and the lift table 11 with the built platform 12 disposed inside the wall 10 of the housing 9, and/or the manufacturing space is the room within the processing chamber 17.

According to the present invention a device for feeding liquid inert cryogen to the manufacturing space is connected to the processing chamber 17 of the apparatus 1. The liquid cryogen may be liquid Nitrogen, liquid Argon, liquid Helium or another inert liquid cryogen.

The device for feeding liquid inert cryogen comprises a storage vessel 15 for a liquid inert cryogen and a feeding device 16 for feeding the liquid inert cryogen to the manufacturing space. The feeding device comprises an injection zone 16A at the bottom of the device. The injection zone is arranged to receive a flow of liquid inert cryogen from the storage vessel 15. Accordingly, the injection zone 16A is provided with appropriate insulation to ensure that the very low temperature of the liquid cryogen does not damage the injection zone 16A or any of the surrounding parts of the system 1. Above the injection zone 16A there is provided a heating zone 16B arranged to receive a flow of liquid inert cryogen from the injection zone 16A. The heating zone 16B is arranged to vaporize and raise the temperature of the liquid cryogen, such that a flow of the cryogen in a gaseous state exits the heating zone. Accordingly, one or more heat exchangers may be provided within the heating zone.

The feeding device 16 also comprises a flow rectification zone above the heating zone. The a flow rectification zone is arranged to receive the flow of the gaseous cryogen from the heating zone, and to rectify the flow of gaseous cryogen such that a straightened flow of gaseous cryogen exits the rectification zone. The flow rectification zone may provide a substantially unidirectional, laminar flow of gaseous inert cryogen into the manufacturing space 20.

The injection zone might also be between rectification and heating zone 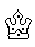

The feeding device 16 may also control the rate (i.e. litres per minute) of liquid fed into the chamber. As will be well understood by the skilled person, the flow rate of the inert liquid cryogen should be selected to ensure that the flow exiting the flow rectification zone remains laminar. It will be understood that increasing the flow rate too much may make the flow turbulent, thereby causing mixing between the ambient air that is initially within the manufacturing space 20 and the gaseous inert cryogen, which would slow down the purging process. Although the precise flow rate required will depend on various factors, including the size of the chamber, it will be understood that the flow rate of liquid cryogen may be between 0,25 kg/min and 25 kg/min. More specifically, if the inert liquid cryogen is liquid Argon, the average flowrate of liquid Argon may be between 0,25 kg/min to 25 kg/min or between 0,5 kg/min to 12 kg/min and preferably between 1 kg/min to 10 kg/min. Alternatively, if the inert liquid cryogen is liquid Nitrogen, the average flowrate of liquid Nitrogen may be between 0,25 kg/min to 10 kg/min or between 0,5 kg/min to 2,5 kg/min and preferably between 1 kg/min to 2 kg/min.

Provision of a laminar, unidirectional flow of gaseous inert cryogen (which is typically the same gas as the process gas) allows the manufacturing space 20 to be rapidly purged by displacing the gas that is initially located within the manufacturing space (for example, ambient air), and causing it to flow out from the manufacturing space 20 via an exhaust port 30, thereby causing the manufacturing space 20 to be purged by displacing the ambient air rather than diluting the ambient air. It is advantageous to provide a unidirectional, laminar flow of the gaseous inert cryogen from the bottom of the manufacturing space to the top of the manufacturing space, as this avoids mixing of the ambient air with the gaseous cryogen. Instead, the ambient air (which is typically less dense than the gaseous cryogen) remains above the gaseous cryogen and flows out through the exhaust port 30.

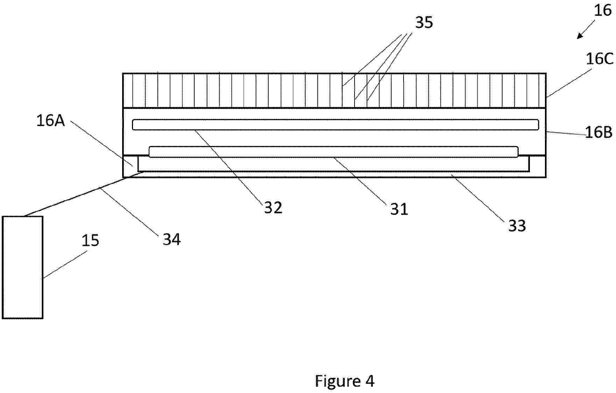

An example of a feeding device for providing a laminar, unidirectional flow of gaseous cryogen according to the present invention will be described in detail below, with respect to figure 4.

An oxygen sensor (not shown) for measuring the proportion of oxygen (O₂ in the manufacturing space 20 is provided in the manufacturing space 20.

The oxygen sensor is connected to a control unit (not shown) and the control unit is arranged to control the flow of liquid inert cryogen to the feeding device 16 according to the value measured by the oxygen sensor. For example, the control unit may control the opening of a valve that allows or prevents flow of liquid cryogen into the feeding device 16, and the control unit may cause the flow of inert liquid cryogen to the device 16 to continue until the sensed oxygen value in the manufacturing space is below the required threshold value.

It will be understood that the location of the oxygen sensor is especially important when purging the manufacturing space 20 by displacement, as significant variations in oxygen concentration may exist within the manufacturing space. In some embodiments, a plurality of oxygen sensors may be present, and the purging may only be considered complete when all of the sensors give a value that is less than the required threshold value.

A device for providing a process gas 18 is also connected to the processing chamber 17 via a corresponding conduit. As a process gas a reducing or reacting gas can be used in order to avoid oxidation of the built-up component. The process gas may be the same type of gas as the cryogen, for example Argon, Nitrogen or Helium. The device 18 supplying process gas may be used to reduce the concentration of impurities by dilution during the manufacturing process (i.e. after the initial purge has been completed).

Once the purge of gas is completed, the apparatus 1 may be used to produce a three-dimensional part by conventional methods of additive manufacture, such as Selective Laser Sintering (SLS), Selective Laser Melting (SLM) or other methods of additive manufacture in which a powdered metal feedstock is heated or melted by a heat source 4.

It will be understood that the present invention is applicable to any methods of additive manufacture that take place in a controlled, inert, atmosphere.

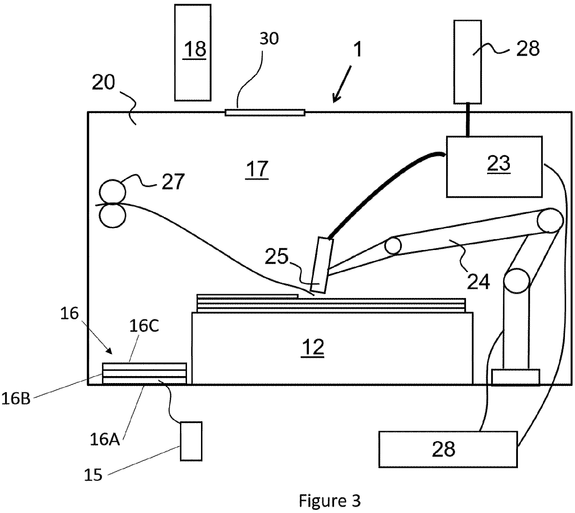

Figure 3 shows an apparatus for WAAM according to another embodiment of the present invention. It is clear that the present invention is applicable for all methods and devices for additive manufacturing disclosed in this description.

The apparatus 1 comprises a welding machine 23 with a robot 24 a welding torch 25 and a shielding gas device.

The apparatus is disposed in a process chamber 17 which can be an inert gas chamber. This process chamber 17 defines a manufacturing space 20.

A workbench (built platform) 12 with a substrate is provided in the process chamber 17.

A base material is provided via a wire feeder 27 or a lase sprayed powder (not shown).

The whole apparatus is controlled via a control unit 28.

According to the present invention a device 16 for feeding liquid inert cryogen to the manufacturing space is connected to the processing chamber 17 of the apparatus 1.

The device 16 for feeding liquid inert cryogen into the manufacturing space is substantially the same as the device 16 described with respect to the embodiment shown in figure 2, and will be described in more detail below with respect to figure 4. The device 16 may be used to purge the manufacturing space 20 by introducing a unidirectional, laminarflow of gaseous inert cryogen into the manufacturing space 20, thereby causing the gas that is initially within the manufacturing space 20 to be displaced and flow out through the exhaust port 30.

Furthermore an oxygen sensor (not shown) for measuring the proportion of oxygen (O₂) in the manufacturing space 20 is provided in the manufacturing space 20.

The oxygen sensor is connected to a control unit (not shown) and the control unit is connected to the device 16 for feeding liquid inert cryogen for controlling the device 16 for feeding liquid inert cryogen according to the value measured by the oxygen sensor. Again, the purging of the manufacturing space by the device 16 may continue until the sensed oxygen value is less than the required threshold value for the manufacturing process to be performed.

A device for providing a process gas 18 is connected to the processing chamber 17 via a corresponding conduit 21. As a process gas a reducing or reacting gas can be used in order to avoid oxidation of the built-up component. The process gas may be the same type of gas as the cryogen, for example Argon, Nitrogen or Helium. The device 18 supplying process gas may be used to reduce the concentration of impurities by dilution during the manufacturing process (i.e. after the initial purge has been completed).

Once the purge of gas is completed, the apparatus 1 shown in figure 3 may be used to produce a three-dimensional part by conventional methods of additive manufacture, such as Wire Arc Additive Manufacture (WAAM), or other methods of additive manufacture in which a metal wire or metal powder feedstock is heated or melted by a welding machine or a laser source 23 controlled by a robot 24.

Figure 4 shows a more detailed view of the feeding device 16 shown in figures 2 and 3. Feeding device 16 would be located at the lowest point (or highest, depending on the gas) in a manufacturing space 20, and is connected to a supply of inert liquid cryogen 15 via conduit 34. A computer-controlled valve (not shown) may be provided in the conduit 34 so as to regulate the flow of liquid cryogen into the feeding device 16. As discussed above, during the purging stage, a controller (not shown) may receive signals from one or more oxygen sensors, and may cease purging of the manufacturing space 20 by shutting off the flow of inert liquid cryogen when the detected oxygen value or values are below the required threshold value for the additive manufacturing process to be performed.

The conduit 34 provides inert liquid cryogen to the insertion zone 16A of the feeding device 16. As can be seen from figure 4, the insertion zone 16A is located at the bottom of the feeding device 16, and comprises a receptacle in which liquid cryogen can be received from the conduit 34. The receptacle has insulated walls 33, which ensure that the very low temperature of the liquid cryogen does not cause damage to the feeding device 16 or any of the surrounding components.

Immediately above the insertion zone 16A is a heating zone 16B, which is arranged to receive a flow of liquid cryogen from the injection zone and to vaporize and raise the temperature of the liquid cryogen, such that a flow of the cryogen in a gaseous state exits the heating zone. As can be seen from figure 4, the heating zone comprises a first heat exchanger 31 and a second heat exchanger 32. The first heat exchanger 31 is arranged to heat the liquid cryogen such that the liquid cryogen at least partially vaporizes, thereby causing a flow of the cryogen in gaseous form. The second heat exchanger 32 is arranged to raise the temperature of the flowing gaseous cryogen. Accordingly, the portion of the heating zone in which the first heat exchanger 31 is located may be referred to as a vaporization zone_, and the portion of the heating zone in which the second heat exchanger is located may be referred to as a 'temperature increase zone_. As will be well understood by the skilled person, vaporization of the liquid cryogen significantly increases its volume, and heating of the gaseous cryogen will further increase its volume. Accordingly, even if the volumetric flow rate of liquid cryogen into the injection zone 16A is relatively low, the volumetric flow rate of gas exiting the heating zone will be significantly higher.

The operation of the first and second heat exchangers 31, 32 may be controlled by a control unit (not shown). The amount of power supplied to each of the heat exchangers may be set based on the flow rate of liquid cryogen and the type of liquid cryogen. The amount of power needed to be supplied to convert liquid cryogen being supplied at a given mass flow rate to gaseous cryogen at a specified temperature can be readily calculated by the skilled person.

Optional: since the process is a badge process, the heat exchanger can also just consist of thermal mass (e.g. aluminum or copper) and provide the energy to evaporate and heat the cryogenic liquid/gas just by the thermal capacity of the material.

It will be understood that it is necessary to raise the temperature of the flow of gaseous cryogen, because this gas will typically be at a very low temperature, and might otherwise damage to the components within the manufacturing space 20. However, it can be beneficial for the gaseous cryogen entering the manufacturing space 20 from the rectification zone 20 to be somewhat cooler than the ambient air that is present before purging commences, because this typically makes the density of the gaseous cryogen higher than that of the ambient air. Accordingly, as the gaseous cryogen flows into the manufacturing space, it displaces the ambient air upwards towards the exhaust port 30 at the top of the manufacturing space.

Above the heating zone 16B is the rectification zone 16C, which comprises rectification means for producing a directed, non-turbulent flow of gas therethrough. Such a directed, non-turbulent flow may be referred to as a 'straightened_flow. In the illustrated embodiment, the rectification means comprise a plurality of spaced-apart, substantially parallel vanes. These vanes act to align the flow and eliminate any transverse flow components, so that the flow exiting the vanes is substantially unidirectional and laminar. Alternative means for producing a non-turbulent, directed flow may comprise a flow straightener having a plurality of parallel ducts adjacent to one another. The flow straightener may be a 'honeycomb_flow straightener having hexagonal ducts. This ensures that the ducts are efficiently packaged and do not cause an excessive pressure drop. The flowstraightner might also have a fine mesh or a textile layer. The skilled person will understand that various other rectification means could be used to ensure a substantially unidirectional, non-turbulent flow exits the rectification zone 16C.

Unless otherwise stated, all technical features described in connection with the embodiments of the apparatus are applicable in connection with method steps for the method according to the present invention.

According to the present invention a method is provided for purging the manufacturing space 20 of an apparatus for additive manufacturing using a feedstock such as metal powder or metal wire.

By this method for additive manufacturing a part is built by selectively sintering or melting a material and building a part additively layer by layer using a heat source sintering or melting the material, wherein the process can be conducted in a process chamber which is purged with a liquid inert cryogen as a purging medium.

During Additive Manufacturing the laser sintering or laser melting of the powder feed or during Additive Manufacturing the laser sintering or laser melting of the powder feed or during WAAM Additive Manufacturing the arc based wire melting system requires inert gas protection as the resulting molten metal can be in the range of over 600 degrees C for aluminum alloys or over 1500 degrees C for most other metals. It is vital that the melt pool be protected from high temperature oxidation from oxygen in the atmosphere. It is vital that oxygen levels are below 1000 ppm or for sensitive materials like titanium and its alloys, the requirement can be below 100ppm and lower and for some other alloys very sensitive to oxygen can be as low as 10ppm.

It is always necessary to protect the molten pool from oxidation as this can lead to weld defects and a reduction in corrosion resistance and reduced mechanical properties and lower fatigue & fracture strength. This is particularly the case in creep resistant materials, alloy steels, stainless steels and its alloys, nickel and its alloys, and titanium and its alloys. The usual method of protecting the cell/chamber is to purge the volume by passing a stream of an inert gas such as argon into the cell volume to reduce the oxygen level. This limits the availability of oxygen at the site of the laser melt pool to cause oxidation.

Some materials suffer oxidation discoloration in reactive metals and embrittlement by oxygen.

The problem which is solved by the present invention is the shortened length of time that is needed for oxygen concentration to be reduced from 200,000 ppm to a much lower level such as about 10 ppm.

The present invention reduces this waiting time and utilizes the rapid expansion of liquid cryogen from liquid phase to the gas phase, in combination with a feeding device that controls the expansion and flow of gaseous cryogen to produce a substantially unidirectional flow of gaseous cryogen. The gaseous cryogen displaces air that is present inside a vessel or pipe to be purged, thereby replacing the air and oxygen present therein with the chosen inert cryogen gas. Purging by displacement in this way can be significantly quicker than prior art methods in which purging is performed by dilution of the air in the chamber. Provision of a substantially unidirectional, non-turbulent flow of cryogen reduces mixing of the air and gaseous cryogen, thereby further speeding up the purging process.

### List of Reference Numbers

- 1: device
- 2: production cylinder
- 3: delivery cylinder
- 4: heat source
- 5: housing
- 6: wall
- 7: powder delivery piston
- 8: powder applying device
- 9: housing
- 10: wall
- 11: lift table
- 12: built platform
- 13: build space
- 14: device for feeding a liquid inert cryogen
- 15: storage vessel
- 16: feeding device
- 16A: injection zone
- 16B: heating zone
- 16C: rectification zone
- 17: processing chamber
- 18: process gas supply
- 20: manufacturing space
- 23: welding machine
- 24: robot
- 25: welding torch
- 27: wire feeder
- 28: control unit
- 30: exhaust port
- 31,32: heat exchanger
- 33: insulated walls
- 34: conduit

## Claims

1. Method for purging an additive manufacturing space,
**characterized in that**,
a liquid inert cryogen is fed to the manufacturing space via a device comprising:
an injection zone arranged to receive the liquid cryogen in a liquid state;
a heating zone arranged to receive liquid cryogen from the injection zone, the heating zone being arranged to vaporize and raise the temperature of the liquid cryogen, such that a flow of the cryogen in a gaseous state exits the heating zone; and
a flow rectification zone arranged to receive the flow of the gaseous cryogen from the heating zone, the flow rectification zone being arranged to rectify the flow of gaseous cryogen such that a straightened flow of gaseous cryogen exits the rectification zone.

2. Method according to claim 1, wherein the straightened flow of gaseous cryogen enters the manufacturing space from the rectification zone.

3. Method according to claim 1 or claim 2,
**characterized in that**,
that the manufacturing space is a chamber for additive manufacturing like a DED (Direct Energy Deposition) additive manufacturing chamber, preferably a WAAM (Wire Arc Additive Manufacturing) chamber or a LPBF (Laser Powder Bed Fusion, SLM, DMLS) chamber.

4. Method according to any one of claims 1 to 3,
**characterized in that**,
that the liquid inert cryogen is liquid Nitrogen, liquid Argon or liquid Helium.

5. Method according to claim 4, wherein
the liquid inert cryogen is liquid Nitrogen and the average flowrate of liquid Nitrogen is between 0,25 kg/min to 10 kg/min or between 0,5 kg/min to 2,5 kg/min and preferably between 1 kg/min to 2 kg/min.

6. Method according to claim 4, wherein
the liquid inert cryogen is liquid Argon and the average flowrate of liquid Argon is between 0,25 kg/min to 25 kg/min or between 0,5 kg/min to 12 kg/min and preferably between 1 kg/min to 10 kg/min.

7. Method according to any preceding claim, wherein the straightened flow is substantially unidirectional, and/or wherein the straightened flow is non-turbulent.

8. Method according to any preceding claim, wherein the heating zone is divided into a vaporization zone in which the liquid cryogen is vaporized and a separate heating zone in which the vaporized cryogen is heated.

9. Method as claimed in any preceding claim, wherein the device is placed at or near the lowest point inside the manufacturing space so that the substantially unidirectional flow of gaseous cryogen flows upwards through the manufacturing space.

10. Method as claimed in claim 9, wherein the substantially unidirectional flow of gaseous cryogen flows upwards through the manufacturing space to an exhaust port located at or near the highest point in the manufacturing space.

11. Method according to any one of the preceding claims,
**characterized in that**,
that the content of oxygen in the manufacturing space is reduced to a set predetermined level, wherein the set predetermined level is determined by the sensitivity of the powder to oxygen to approximately 10 parts per million of oxygen so that the powder can be melted wherein the set oxygen level is preferably less than 1000 ppm or less than 100 ppm or less than 10 ppm.

12. Method according to any preceding claim,
**characterized in that**,
the method comprises the further steps of,
providing a base material on a substrate,
melting the base material with a heat source, and
repeating the aforementioned steps.

13. Apparatus for additive manufacturing comprising
a base material delivery system ,
a heat source which is a device for generating a plasma or an arc or a laser for melting the powder, and a
process chamber,
**characterized in that**,
a device for feeding liquid inert cryogen to the manufacturing space is connected to the manufacturing space chamber of the device,
**characterized in that** the device comprises:
an injection zone arranged to receive the liquid cryogen in a liquid state;
a heating zone arranged to receive liquid cryogen from the injection zone, the heating zone being arranged to vaporize and raise the temperature of the liquid cryogen, such that a flow of the cryogen in a gaseous state exits the heating zone; and
a flow rectification zone arranged to receive the flow of the gaseous cryogen from the heating zone, the flow rectification zone being arranged to rectify the flow of gaseous cryogen such that a straightened flow of gaseous cryogen exits the rectification zone.

14. Apparatus as claimed in claim 13, wherein the device is placed at or near the lowest point or for light gases the highest point inside the manufacturing space so that the substantially unidirectional flow of gaseous cryogen flows upwards through the manufacturing space.

15. Apparatus as claimed in claim 14, further comprising an exhaust port at or near the highest point in the manufacturing space, such that the substantially unidirectional flow of gaseous cryogen flows upwards through the manufacturing space to the exhaust port.
